# EUROPEAN PATENT APPLICATION

(11) **EP 4 365 703 A1**
(43) Date of publication of application: **08.05.2024**
(21) Application number: 21848234.7
(22) Date of filing: 30.06.2021
(51) Int. Cl.: G06E 3/00, G02B 5/18

(54) **OPTICAL ARITHMETIC DEVICE AND OPTICAL ARITHMETIC METHOD**

(71) Applicant: Fujikura Ltd., Tokyo 135-8512 (JP)
(72) Inventor: KUSAKA, Hiroyuki, Tokyo 135-8512 (JP); KASHIWAGI, Masahiro, Tokyo 135-8512 (JP); KUNAI, Yuichiro, Tokyo 135-8512 (JP)
(74) Representative: Plasseraud IP
(86) International application number: PCT/JP2021/024813
(87) International publication number: WO 2023/276060

(57) **Abstract**

An optical computing device (1) includes an optical diffraction element group (11) and a filter (12) which is disposed so as to precede the optical diffraction element group (11). The optical diffraction element group (11) includes at least one optical diffraction element (11a1 to 11an) having an optical computing function. The filter (12) selectively transmits light which travels in a direction that forms an angle equal to or smaller than a specific angle (θ1) with an optical axis (L1) of a first optical diffraction element (11a1) which is included in the at least one optical diffraction element included in the optical diffraction element group (11) and which signal light first enters.

## Description

### Technical Field

The present invention relates to an optical computing device and an optical computing method in each of which optical computing is carried out with use of an optical diffraction element.

### Background Art

There is known an optical diffraction element which has a plurality of cells and which is designed to optically carry out predetermined computing by causing signal light that passes through the plurality of cells to interfere with itself. Such optical computing that is carried out with use of an optical diffraction element has an advantage that it is carried out at a higher speed and with lower power consumption than electrical computing that is carried out with use of a processor. Furthermore, it is possible to realize multiple-stage optical computing (optical computing in two or more stages) by causing two or more optical diffraction elements which are disposed side by side to work with respect to signal light.

Patent Literature 1 discloses an optical neural network which has an input layer, an intermediate layer, and an output layer. The foregoing optical diffraction element can be used as, for example, an intermediate layer of such an optical neural network.

### Citation List

### [Patent Literature]

[Patent Literature 1]
Specification of U.S. Patent No. 7847225

### Summary of Invention

### Technical Problem

However, in an optical computing device in which optical computing is carried out with use of an optical diffraction element, a phenomenon can occur in which noise light that comes from a direction different from a direction of signal light enters the optical diffraction element. In a case where such a phenomenon occurs, a problem of deterioration of accuracy of computing due to noise light can arise.

An aspect of the present invention has been made in view of the above problem, and an object thereof is to realize an optical computing device or an optical computing method in each of which deterioration of accuracy of computing due to noise light is prevented.

### Solution to Problem

In order to attain the above object, an optical computing device in accordance with an aspect of the present invention is an optical computing device including: an optical diffraction element group which includes at least one optical diffraction element having an optical computing function; and a filter which is disposed so as to precede the optical diffraction element group, the filter selectively transmitting light which travels in a direction that forms an angle equal to or smaller than a specific angle with an optical axis of a first optical diffraction element which is included in the at least one optical diffraction element included in the optical diffraction element group and which signal light first enters.

In order to attain the above object, an optical computing method in accordance with an aspect of the present invention is an optical computing method of carrying out optical computing with use of an optical diffraction element group which includes an optical diffraction element, the method including: with use of a filter which is disposed so as to precede the optical diffraction element group, selectively causing light to enter a first optical diffraction element, the light being light which travels in a direction that forms an angle equal to or smaller than a specific angle with an optical axis of the first optical diffraction element, the first optical diffraction element being an optical diffraction element which is included in the optical diffraction element included in the optical diffraction element group and which signal light first enters.

### Advantageous Effects of Invention

According to an aspect of the present invention, it is possible to realize an optical computing device or an optical computing method in each of which deterioration of accuracy of computing due to noise light is prevented.

### Brief Description of Drawings

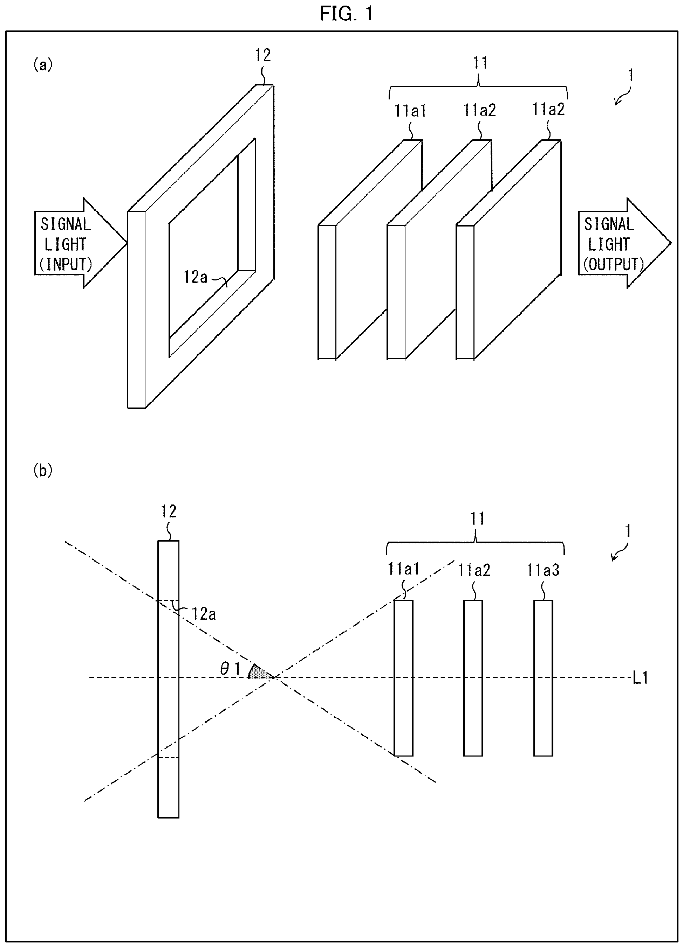

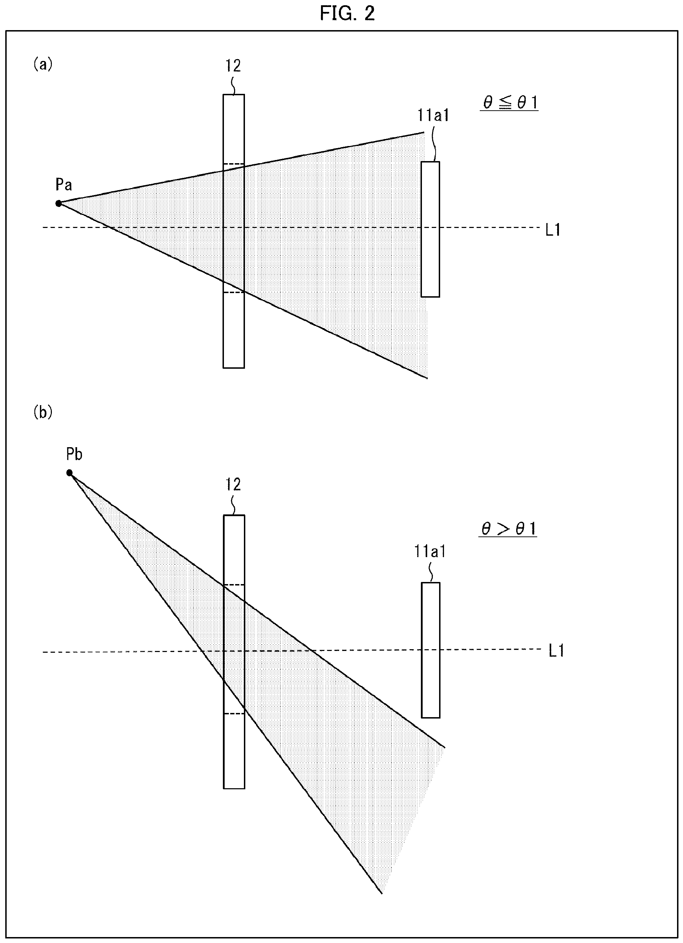

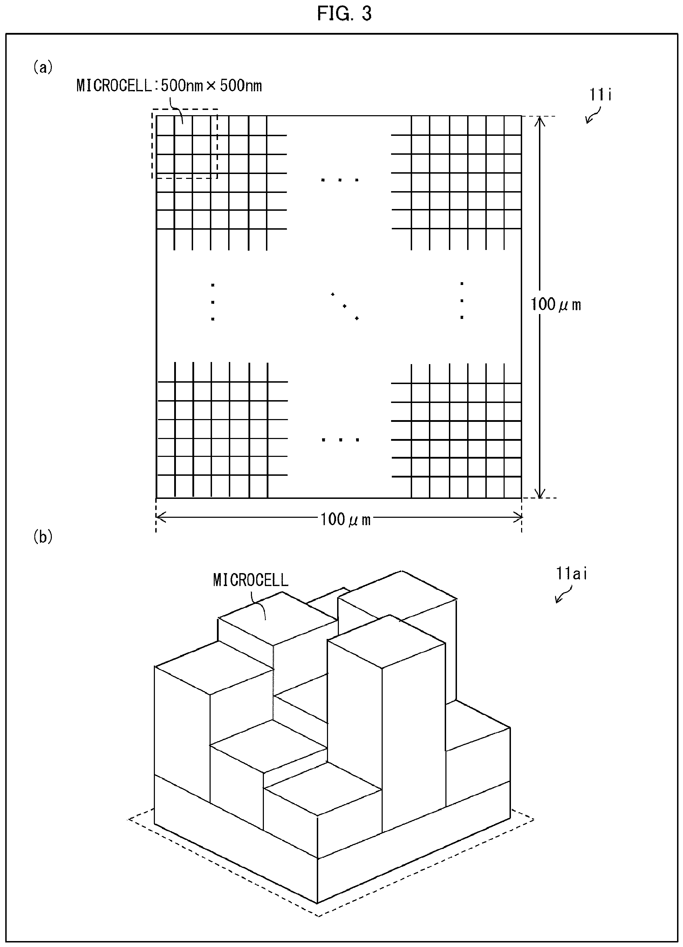

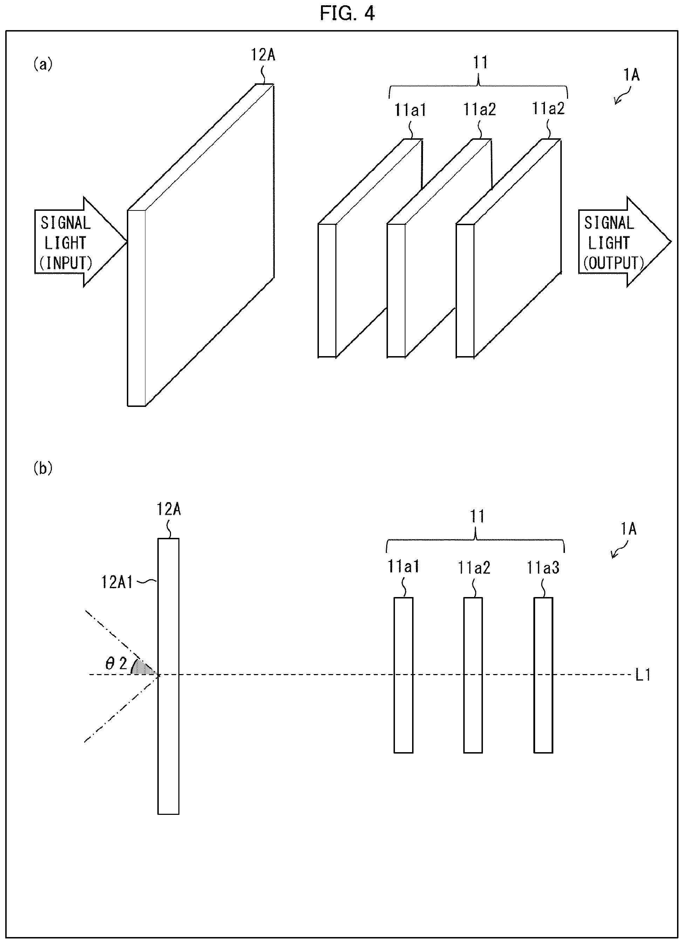

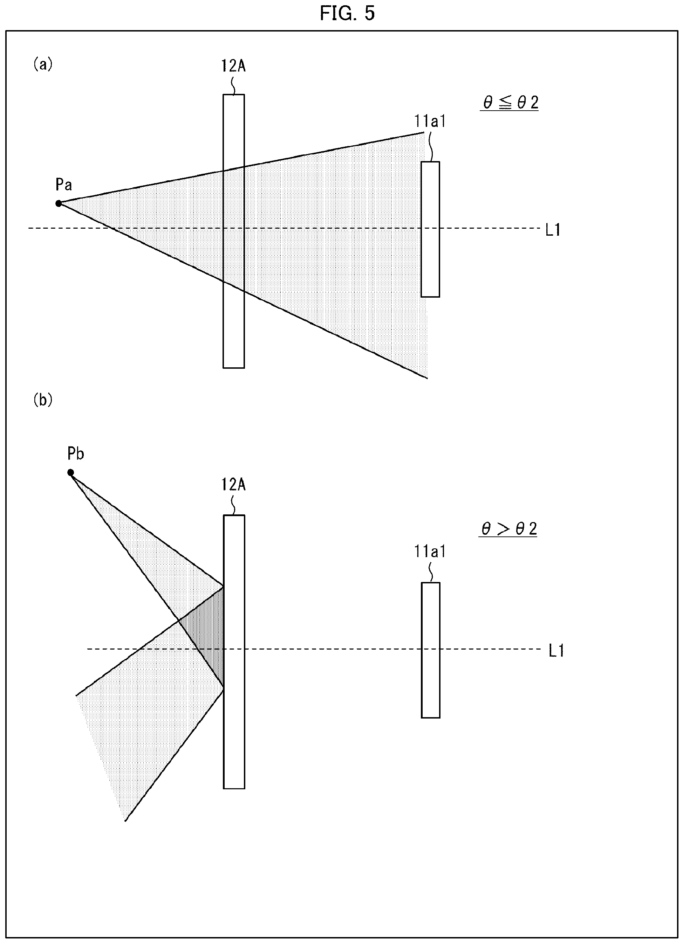

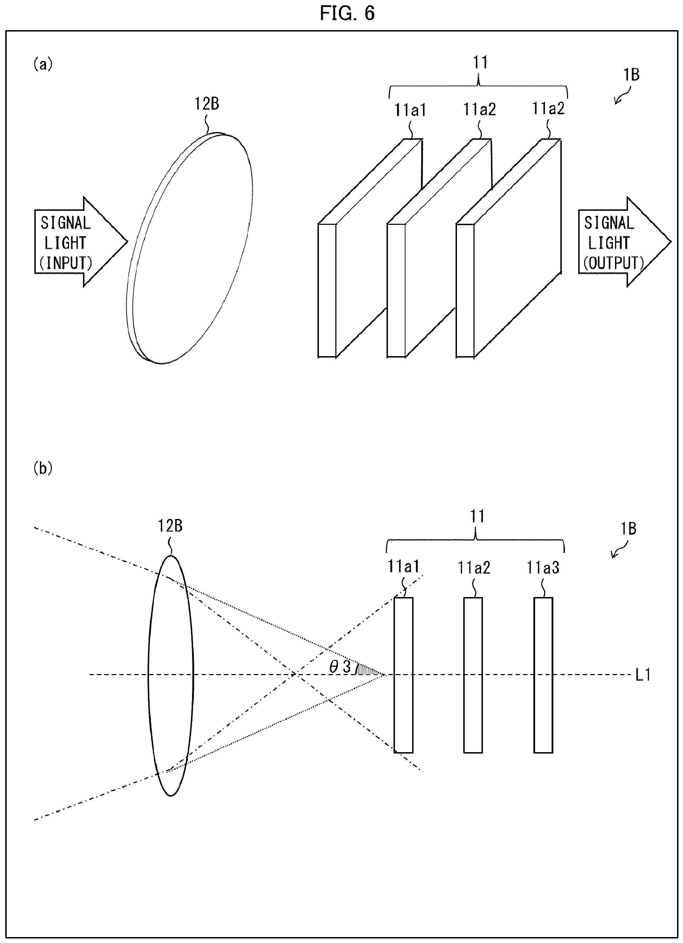

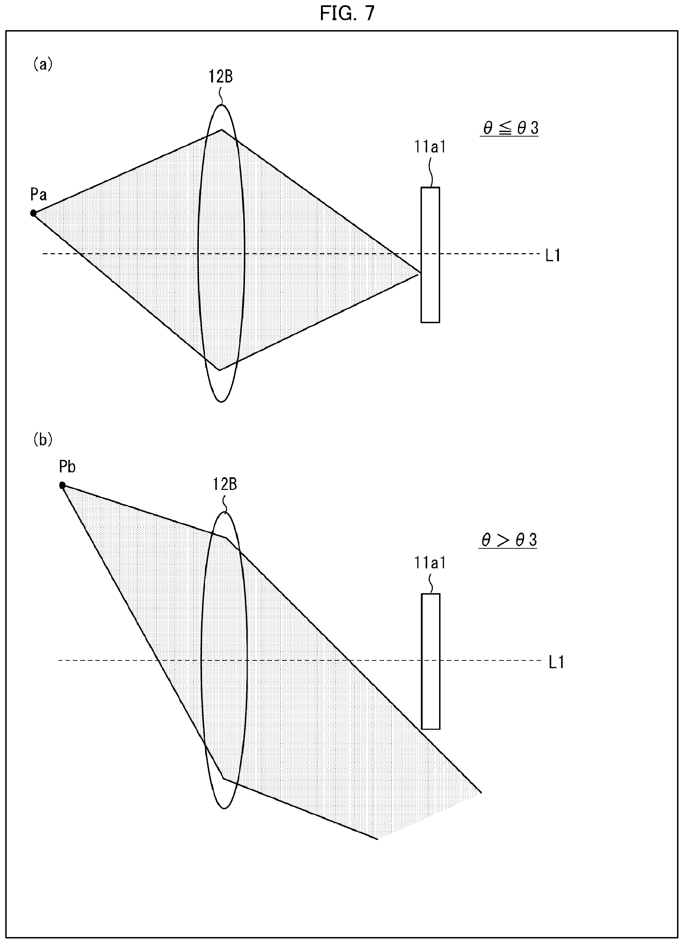

(a) of Fig. 1 is a perspective view of an optical computing device in accordance with an embodiment of the present invention. (b) of Fig. 1 is a plan view of the optical computing device.
(a) and (b) of Fig. 2 are each a plan view of a first optical diffraction element and a filter (diaphragm) included in the optical computing device illustrated in Fig. 1. (a) of Fig. 2 illustrates behavior of light (signal light) which comes from a point that is close to an optical axis of the first optical diffraction element, and (b) of Fig. 2 illustrates behavior of light (noise light) which comes from a point that is distant from the optical axis of the first optical diffraction element.
(a) of Fig. 3 is a plan view of an optical diffraction element included in the optical computing device illustrated in Fig. 1. (b) of Fig. 3 is a perspective view illustrating a part of the optical diffraction element in an enlarged manner.
(a) of Fig. 4 is a perspective view of an optical computing device which is a first variation of the optical computing device illustrated in Fig. 1. (b) of Fig. 4 is a plan view of the optical computing device.
(a) and (b) of Fig. 5 are each a plan view of a first optical diffraction element and a filter (block) included in the optical computing device illustrated in Fig. 4. (a) of Fig. 5 illustrates behavior of light (signal light) which comes from a point that is close to an optical axis of the first optical diffraction element, and (b) of Fig. 5 illustrates behavior of light (noise light) which comes from a point that is distant from the optical axis of the first optical diffraction element.
(a) of Fig. 6 is a perspective view of an optical computing device which is a second variation of the optical computing device illustrated in Fig. 1. (b) of Fig. 6 is a plan view of the optical computing device.
(a) and (b) of Fig. 7 are each a plan view of a first optical diffraction element and a filter (lens) included in the optical computing device illustrated in Fig. 6. (a) of Fig. 7 illustrates behavior of light (signal light) which comes from a point that is close to an optical axis of the first optical diffraction element, and (b) of Fig. 7 illustrates behavior of light (noise light) which comes from a point that is distant from the optical axis of the first optical diffraction element.

### Description of Embodiments

### [Configuration of optical computing device]

The following description will discuss a configuration of an optical computing device 1 in accordance with an embodiment of the present invention, with reference to Fig. 1. (a) of Fig. 1 is a perspective view of the optical computing device 1, and (b) of Fig. 1 is a plan view of the optical computing device 1.

As illustrated in Fig. 1, the optical computing device 1 includes an optical diffraction element group 11 and a filter 12.

The optical diffraction element group 11 is a group of n optical diffraction elements 11a1 to 11an. Note, here, that n is any natural number of one or more. Each optical diffraction element 11ai is an element which has an optical computing function, i.e., a function of carrying out a conversion of two-dimensional intensity distribution of signal light in accordance with a predetermined conversion rule. Note, here, that i is a natural number of one or more but n or less. Fig. 1 illustrates a group of three optical diffraction elements 11a1 to 11a3 as the optical diffraction element group 11. A specific example of each optical diffraction element 11ai will be described later with reference to Fig. 3.

In the optical diffraction element group 11, the first optical diffraction element 11a1, the second optical diffraction element 11a2, ..., and the nth optical diffraction element 11an are disposed side by side in a line on an optical path of the signal light. Therefore, the signal light which is inputted into the optical diffraction element group 11 passes through the first optical diffraction element 11a1, the second optical diffraction element 11a2, ..., and the nth optical diffraction element 11an in this order. Therefore, in the optical diffraction element group 11, first optical computing is carried out by the first optical diffraction element 11a1, second optical computing is carried out by the second optical diffraction element 11a2, ..., and nth optical computing is carried out by the nth optical diffraction element 11an, in this order with respect to the signal light. The two-dimensional intensity distribution of the signal light which is outputted from the optical diffraction element group 11 indicates results of such computing.

The filter 12 is disposed so as to precede the optical diffraction element group 11. The filter 12 is for selectively guiding, to the optical diffraction element group 11, light which travels in a direction that forms, with an optical axis L1 of the first optical diffraction element 11a1 which the signal light first enters, an angle θ equal to or smaller than a specific angle. In the present embodiment, a diaphragm having an aperture 12a is used as the filter 12. Thus, the foregoing specific angle is a maximum value θ1 of an angle formed by the optical axis L1 and an optical axis of a light beam which enters the first optical diffraction element 11a1 through the aperture 12a of the filter 12 which is a diaphragm. Among light which enters the filter 12, light which travels in a direction that forms, with the optical axis L1, an angle θ greater than the specific angle θ1 is absorbed by the filter 12.

Note that in a case where optical computing carried out by the optical diffraction element group 11 is optical computing with respect to an image, light which is inputted into the optical diffraction element group 11 through the filter 12 can have any of the following two aspects. In a first aspect, light which has been reflected or scattered by an object that is a subject is inputted into the optical diffraction element group 11 through the filter 12 as it is. In a second aspect, (1) light which has been reflected or scattered by an object which is a subject is converted into an electrical signal with use of an image sensor, (2) the electrical signal which has been outputted from the image sensor is converted into an optical signal with use of an image display, and (3) the optical signal which has been outputted from the image display is inputted into the optical diffraction element group 11 through the filter 12.

In a case where the second aspect is employed, the optical computing device 1 may further include merely the foregoing image display or may further include both the foregoing image sensor and the foregoing image display. The image sensor can be, for example, a two-dimensional image sensor which includes a plurality of light receiving cells that are disposed in a matrix manner. The image display can be, for example, a two-dimensional image display which includes a plurality of light emitting cells that are disposed in a matrix manner.

The optical computing device 1 may further include another image sensor which converts, into an electrical signal, the signal light that is outputted from the optical diffraction element group 11. The another image sensor can be, for example, a two-dimensional image sensor which includes a plurality of light receiving cells that are disposed in a matrix manner.

### [Effect of optical computing device]

An effect of the optical computing device 1 will be described below with reference to Fig. 2. (a) and (b) of Fig. 2 are each a plan view illustrating the filter 12 and the first optical diffraction element 11a1 of the optical computing device 1.

As illustrated in (a) of Fig. 2, light which comes from a point Pa that is close to the optical axis L1 of the first optical diffraction element 11a1 travels in a direction which forms, with the optical axis L1, an angle θ equal to or smaller than the foregoing specific angle θ1. Thus, the light can enter the first optical diffraction element 11a1 through the aperture 12a. As such light, light which comes from an object or an image display, i.e., the signal light is mainly assumed.

On the other hand, as illustrated in (b) of Fig. 2, light which comes from a point Pb that is distant from the optical axis L1 of the first optical diffraction element 11a1 travels in a direction which forms, with the optical axis L1, an angle θ greater than the foregoing specific angle θ1. Thus, the light cannot enter the first optical diffraction element 11a1 through the aperture 12a. As such light, light which comes from a place other than an object or an image display, i.e., noise light is mainly assumed.

Therefore, in the optical computing device 1, it is possible to prevent the noise light from entering the first optical diffraction element 11a1, without preventing the signal light from entering the first optical diffraction element 11a1. Therefore, it is possible to prevent deterioration of accuracy of computing due to the noise light.

### [Specific example of optical diffraction element]

A specific example of the optical diffraction element 11ai will be described below with reference to Fig. 3. (a) of Fig. 3 is a plan view of the optical diffraction element 11ai in accordance with the present specific example. (b) of Fig. 3 is a perspective view illustrating, in an enlarged manner, a part (part enclosed by a dotted line in (a) of Fig. 3) of the optical diffraction element 11ai in accordance with the present specific example.

The optical diffraction element 11ai is constituted by a plurality of microcells each of which has a thickness or a refractive index that is independently set. In a case where the signal light enters the optical diffraction element 11ai, the signal light which has been diffracted by the microcells and which has different phases interferes with itself, so that predetermined optical computing (conversion of the two-dimensional intensity distribution in accordance with the predetermined conversion rule) is carried out. Note that, in this specification, the term "microcell" indicates, for example, a cell having a cell size of less than 10 pm. Note also that, in this specification, the term "cell size" indicates a square root of an area of a cell. For example, in a case where a microcell has a square shape in a plan view, a cell size of the microcell indicates a length of a side of the microcell. A lower limit of the cell size is, for example, 1 nm.

The optical diffraction element 11ai illustrated in Fig. 3 is constituted by 200 × 200 microcells which are disposed in a matrix manner. Each of the microcells has a square shape of 500 nm × 500 nm in a plan view, and the optical diffraction element 11ai has a square shape of 100 pm × 100 pm in a plan view.

By (1) independently setting the thickness of each of the microcells or (2) independently selecting the refractive index of each of the microcells, it is possible to independently set a phase-change amount of the signal light which passes through the each of the microcells. In the present embodiment, the method (1), which can be realized by nanoimprinting, is employed. In this case, as illustrated in (b) of Fig. 3, each of the microcells is constituted by a pillar which has a quadrangular prism shape and which has a square bottom surface that has sides each having a length equal to a cell size. Further, in this case, the phase-change amount of the signal light which passes through each of the microcells is determined depending on a height of a pillar which constitutes the each of the microcells. That is, the phase-change amount of the signal light which passes through a microcell that is constituted by a pillar that has a high height is large, and the phase-change amount of the signal light which passes through a microcell that is constituted by a pillar that has a low height is small.

Note that the thickness or the refractive index of each of the microcells can be set, for example, with use of machine learning. A model used in the machine learning can be, for example, a model in which the two-dimensional intensity distribution of the signal light that is inputted into the optical diffraction element 11ai is input and the two-dimensional intensity distribution of the signal light that is outputted from the optical diffraction element 11ai is output and which includes the thickness or the refractive index of each of the microcells as a parameter. Note, here, that the two-dimensional intensity distribution of the signal light which is inputted into the optical diffraction element 11ai indicates a group of intensities of the signal light which is inputted into the microcells that constitute the optical diffraction element 11ai. Note also that the two-dimensional intensity distribution of the signal light which is outputted from the optical diffraction element 11ai indicates a group of the intensities of the signal light which is inputted into microcells that constitute an optical diffraction element 11ai+1 disposed so as to follow the optical diffraction element 11ai or a group of the intensities of the signal light which is inputted into cells that constitute a light receiving section disposed so as to follow the optical diffraction element 11ai.

### [First variation of optical computing device]

A first variation (hereinafter, referred to as an optical computing device 1A) of the optical computing device 1 will be described below with reference to Fig. 4. (a) of Fig. 4 is a perspective view of the optical computing device 1A, and (b) of Fig. 4 is a plan view of the optical computing device 1A.

The optical computing device 1A differs from the optical computing device 1 in that the optical computing device 1A employs a block as a filter 12A instead of employing the diaphragm as the filter 12. The block is made of a material which has a refractive index higher than that of air, and is disposed such that a surface 12A1 thereof which is located on a side opposite from a surface which faces a first optical diffraction element 11a1 is perpendicular to an optical axis L1.

Similarly to the filter 12, the filter 12A selectively guides, to an optical diffraction element group 11, light which travels in a direction that forms, with the optical axis L1 of the first optical diffraction element 11a1, an angle θ equal to or smaller than a specific angle. In the present variation, the foregoing specific angle is a critical angle θ2 on the surface 12A1 of the block which constitutes the filter 12A. Among light which enters the filter 12A, light which travels in a direction that forms, with the optical axis L1, an angle θ greater than the specific angle θ2 is totally reflected by the filter 12A.

### [Effect of first variation]

An effect of the optical computing device 1A will be described below with reference to Fig. 5. (a) and (b) of Fig. 5 are each a plan view illustrating the filter 12A and the first optical diffraction element 11a1 of the optical computing device 1A.

As illustrated in (a) of Fig. 5, light which comes from a point Pa that is close to the optical axis L1 of the first optical diffraction element 11a1 travels in a direction which forms, with the optical axis L1, an angle θ equal to or smaller than the foregoing specific angle θ2. Thus, the light can enter the first optical diffraction element 11a1. As such light, light which comes from an object or an image display, i.e., signal light is mainly assumed.

On the other hand, as illustrated in (b) of Fig. 5, light which comes from a point Pb that is distant from the optical axis L1 of the first optical diffraction element 11a1 travels in a direction which forms, with the optical axis L1, an angle θ greater than the foregoing specific angle θ2. Thus, the light cannot enter the first optical diffraction element 11a1. As such light, light which comes from a place other than an object or a display, i.e., noise light is mainly assumed.

Therefore, in the optical computing device 1A, it is possible to prevent the noise light from entering the first optical diffraction element 11a1, without preventing the signal light from entering the first optical diffraction element 11a1. Therefore, it is possible to prevent deterioration of accuracy of computing due to the noise light.

### [Second variation of optical computing device]

A first variation (hereinafter, referred to as an optical computing device 1B) of the optical computing device 2 will be described below with reference to Fig. 6. (a) of Fig. 6 is a perspective view of the optical computing device 1B, and (b) of Fig. 6 is a plan view of the optical computing device 1B.

The optical computing device 1B differs from the optical computing device 1 in that the optical computing device 1B employs a lens as a filter 12B instead of employing the diaphragm as the filter 12. The lens is made of a material which has a refractive index higher than that of air, and is disposed such that an optical axis of the lens coincides with an optical axis of a first optical diffraction element 11a1.

Similarly to the filter 12, the filter 12B selectively guides, to an optical diffraction element group 11, light which travels in a direction that forms, with the optical axis L1 of the first optical diffraction element 11a1, an angle θ equal to or smaller than a specific angle. In the present variation, the foregoing specific angle is a maximum value θ3 of an angle formed by the optical axis L1 and an optical axis of a light beam, which enters the first optical diffraction element 11a1 through the filter 12B which is a lens, before the light beam enters the filter 12B which is a lens. The specific angle θ3 is, for example, 80 degrees.

### [Effect of second variation]

An effect of the optical computing device 1B will be described below with reference to Fig. 7. (a) and (b) of Fig. 7 are each a plan view illustrating the filter 12B and the first optical diffraction element 11a1 of the optical computing device 1B.

As illustrated in (a) of Fig. 7, light which comes from a point Pa that is close to the optical axis L1 of the first optical diffraction element 11a1 travels in a direction which forms, with the optical axis L1, an angle θ equal to or smaller than the foregoing specific angle θ3. Thus, the light can enter the first optical diffraction element 11a1. As such light, light which comes from an object or an image display, i.e., signal light is mainly assumed.

On the other hand, as illustrated in (b) of Fig. 7, light which comes from a point Pb that is distant from the optical axis L1 of the first optical diffraction element 11a1 travels in a direction which forms, with the optical axis L1, an angle θ greater than the foregoing specific angle θ3. Thus, the light cannot enter the first optical diffraction element 11a1. As such light, light which comes from a place other than an object or an image display, i.e., noise light is mainly assumed.

Therefore, in the optical computing device 1B, it is possible to prevent the noise light from entering the first optical diffraction element 11a1, without preventing the signal light from entering the first optical diffraction element 11a1. Therefore, it is possible to prevent deterioration of accuracy of computing due to the noise light.

Aspects of the present invention can also be expressed as follows.

In this specification, the following aspects are disclosed.

### (First aspect)

An optical computing device including:
an optical diffraction element group which includes at least one optical diffraction element having an optical computing function; and
a filter which is disposed so as to precede the optical diffraction element group,
the filter selectively transmitting light which travels in a direction that forms an angle equal to or smaller than a specific angle with an optical axis of a first optical diffraction element which is included in the at least one optical diffraction element included in the optical diffraction element group and which signal light first enters.

### (Second aspect)

The optical computing device as set forth in the first aspect, wherein:
the filter is a diaphragm; and
the specific angle is a maximum value of an angle formed by the optical axis of the first optical diffraction element and an optical axis of a light beam which enters the first optical diffraction element through an aperture of the diaphragm.

### (Third aspect)

The optical computing device as set forth in the first aspect, wherein:
the filter is a block which is made of a material that has a refractive index higher than that of air and which is disposed such that a surface thereof which is located on a side opposite from a surface thereof which faces the first optical diffraction element is perpendicular to the optical axis; and
the specific angle is a critical angle on the surface of the block which surface is located on the side opposite from the surface of the block which surface faces the first optical diffraction element.

### (Fourth aspect)

The optical computing device as set forth in the first aspect, wherein:
the filter is a lens; and
the specific angle is a maximum value of an angle formed by the optical axis of the first optical diffraction element and an optical axis of a light beam, which enters the first optical diffraction element through the lens, before the light beam enters the lens.

### (Fifth aspect)

The optical computing device as set forth in any one of the first through fourth aspects, wherein the optical diffraction element group includes at least one optical diffraction element having a plurality of microcells each of which has a thickness or a refractive index that is independently set.

### (Sixth aspect)

An optical computing method of carrying out optical computing with use of an optical diffraction element group which includes an optical diffraction element, the method including:
with use of a filter which is disposed so as to precede the optical diffraction element group, selectively causing light to enter a first optical diffraction element,
the light being light which travels in a direction that forms an angle equal to or smaller than a specific angle with an optical axis of the first optical diffraction element,
the first optical diffraction element being an optical diffraction element which is included in the optical diffraction element included in the optical diffraction element group and which signal light first enters.

### [Supplementary note]

The present invention is not limited to the embodiments above, and can be altered by a skilled person in the art within the scope of the claims. The present invention also encompasses, in its technical scope, any embodiment derived by combining technical means disclosed in the embodiments above.

### Reference Signs List

1, 1A, 1B Optical computing device
11 Optical diffraction element group
11a1 to 11an Optical diffraction element
12 Filter (diaphragm)
12A Filter (block)
12B Filter (lens)

## Claims

1. An optical computing device comprising:
an optical diffraction element group which includes at least one optical diffraction element having an optical computing function; and
a filter which is disposed so as to precede the optical diffraction element group,
the filter selectively transmitting light which travels in a direction that forms an angle equal to or smaller than a specific angle with an optical axis of a first optical diffraction element which is included in the at least one optical diffraction element included in the optical diffraction element group and which signal light first enters.

2. The optical computing device as set forth in claim 1, wherein:
the filter is a diaphragm; and
the specific angle is a maximum value of an angle formed by the optical axis of the first optical diffraction element and an optical axis of a light beam which enters the first optical diffraction element through an aperture of the diaphragm.

3. The optical computing device as set forth in claim 1, wherein:
the filter is a block which is made of a material that has a refractive index higher than that of air and which is disposed such that a surface thereof which is located on a side opposite from a surface thereof which faces the first optical diffraction element is perpendicular to the optical axis; and
the specific angle is a critical angle on the surface of the block which surface is located on the side opposite from the surface of the block which surface faces the first optical diffraction element.

4. The optical computing device as set forth in claim 1, wherein:
the filter is a lens; and
the specific angle is a maximum value of an angle formed by the optical axis of the first optical diffraction element and an optical axis of a light beam, which enters the first optical diffraction element through the lens, before the light beam enters the lens.

5. The optical computing device as set forth in any one of claims 1 through 4, wherein the optical diffraction element group includes at least one optical diffraction element having a plurality of microcells each of which has a thickness or a refractive index that is independently set.

6. An optical computing method of carrying out optical computing with use of an optical diffraction element group which includes an optical diffraction element, the method comprising:
with use of a filter which is disposed so as to precede the optical diffraction element group, selectively causing light to enter a first optical diffraction element,
the light being light which travels in a direction that forms an angle equal to or smaller than a specific angle with an optical axis of the first optical diffraction element,
the first optical diffraction element being an optical diffraction element which is included in the optical diffraction element included in the optical diffraction element group and which signal light first enters.
